(19)

**Europäisches Patentamt**
**European Patent Office**
**Office européen des brevets**

(11) **EP 4 557 233 A2**

(12) **EUROPEAN PATENT APPLICATION**

(43) Date of publication:
**21.05.2025 Bulletin 2025/21**

(21) Application number: **24211330.6**

(22) Date of filing: **07.11.2024**

(51) International Patent Classification (IPC):
**G06V 10/44** (2022.01)   **G06T 7/593** (2017.01)
**G06V 10/82** (2022.01)   **G06V 40/10** (2022.01)
**G06V 40/16** (2022.01)

(52) Cooperative Patent Classification (CPC):
**G06V 10/454; G06T 7/593; G06V 10/82;**
**G06V 40/103; G06V 40/168; G06V 40/172**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.11.2023 JP 2023193846**

(71) Applicant: **CANON KABUSHIKI KAISHA**
**Tokyo 146-8501 (JP)**

(72) Inventor: **OGAWA, Shuhei**
**Tokyo, 146-8501 (JP)**

(74) Representative: **TBK**
**Bavariaring 4-6**
**80336 München (DE)**

(54) **INFORMATION PROCESSING APPARATUS AND CONTROL METHOD THEREFOR**

(57)   An information processing apparatus (100), comprises: first generation means (203) configured to generate first feature amounts from a first image; second generation means (203) configured to generate second feature amounts from a second image that is different from the first image; combining means (204) configured to combine the first feature amounts and the second feature amounts; division means (204) configured to divide the combined feature amounts into a plurality of groups; and mixing means (204) configured to mix feature amounts included in each of the plurality of groups on a group-by-group basis. At least one group included among the plurality of groups includes both of the first feature amounts and the second feature amounts.

**F I G.  2**

EP 4 557 233 A2

**Description**

BACKGROUND OF THE INVENTION

Field of the Invention

The present invention relates to processing that uses a neural network.

Description of the Related Art

In recent years, the accuracy of image recognition techniques, such as image classification, object detection, and object tracking, has been dramatically improving due to the advent of a deep neural network (DNN). While there are a variety of DNN structures, a convolutional neural network (CNN) that executes convolution computation across multiple layers has been mainly used in image recognition. Meanwhile, in Dosovitskiy et al., "An Image is Worth 16x16 Words: Transformers for Image Recognition at Scale", arXiv:2010.11929, 2020 (Non-Patent Document 1), a Vision Transformer (ViT) is proposed that applies a transformer used in natural language processing to image recognition. A transformer is a structure that indicates relationships among terms using attention in natural language processing. However, the problem with ViT is that the number of parameters and the amount of calculation are large.

In Liu et al., "Swin Transformer: Hierarchical Vision Transformer using Shifted Windows", arXiv:2103.14030, 2021 (Non-Patent Document 2), a technique is proposed that suppresses the amount of calculation and the number of parameters by dividing feature amounts into several rectangular windows and applying multi-head self attention (MSA) on a window-by-window basis. The method of Non-Patent Document 2 is called Swin Transformer. Furthermore, in Lin et al. "SwinTrack: A Simple and Strong Baseline for Transformer Tracking", arXiv:2112.00995, 2021 (Non-Patent Document 3), a technique is proposed that finds a tracking target from a search range using Swin Transformer.

However, the method described in Non-Patent Document 3 performs token mixing, such as MSA, after simply combining template features that are a tracking target and search features that are a search target in a spatial direction. As the amount of processing of MSA is proportional to the square of the size in the spatial direction, there is a problem of a significant increase in the amount of processing in token mixing.

SUMMARY OF THE INVENTION

The present invention in its first aspect provides an information processing apparatus as specified in claims 1 to 10.

The present invention in its second aspect provides a control method as specified in claim 11.

The present invention in its third aspect provides a program as specified in claim 12.

The present invention reduces the amount of processing in token mixing.

Further features of the present invention will become apparent from the following description of exemplary embodiments (with reference to the attached drawings).

BRIEF DESCRIPTION OF THE DRAWINGS

The accompanying drawings, which are incorporated in and constitute a part of the specification, illustrate embodiments of the invention and, together with the description, serve to explain the principles of the invention.

FIG. 1 is a diagram showing a hardware configuration of an information processing apparatus.
FIG. 2 is a diagram showing a functional configuration of the information processing apparatus (first embodiment).
FIG. 3 is a flowchart showing processing of a tracking task.
FIG. 4 is a detailed flowchart of matching processing (step S307).
FIGs. 5A to 5C are diagrams illustrating combining of feature amounts and division into groups.
FIGs. 6A to 6C are diagrams illustrating rearrangement of feature amounts (modification example 1-1).
FIG. 7 is a diagram illustrating another example of division of feature amounts into groups.
FIGs. 8A and 8B are diagrams illustrating a template image and a search image.
FIG. 9 is a flowchart showing processing executed by a CNN.
FIG. 10 is a diagram showing processing in each layer of the CNN.
FIG. 11 is a diagram showing processing of an MLP.
FIGs. 12A to 12C are diagrams illustrating an input image, a likelihood map, and a BB map.
FIG. 13 is a flowchart showing another example of matching processing (modification example 1-1).
FIG. 14 is a flowchart showing another example of matching processing (modification example 1-2).

FIGs. 15A and 15B are diagrams illustrating downsampling (modification example 1-2).

FIG. 16 is a diagram showing a functional configuration of an information processing apparatus (second embodiment).

FIG. 17 is a flowchart showing processing of a parallax estimation task.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

(First Embodiment)

The following describes a first embodiment of an information processing apparatus according to the present invention, using an example of an information processing apparatus that executes a tracking task with respect to moving image data using a neural network (NN).

<Hardware Configuration of Information Processing Apparatus>

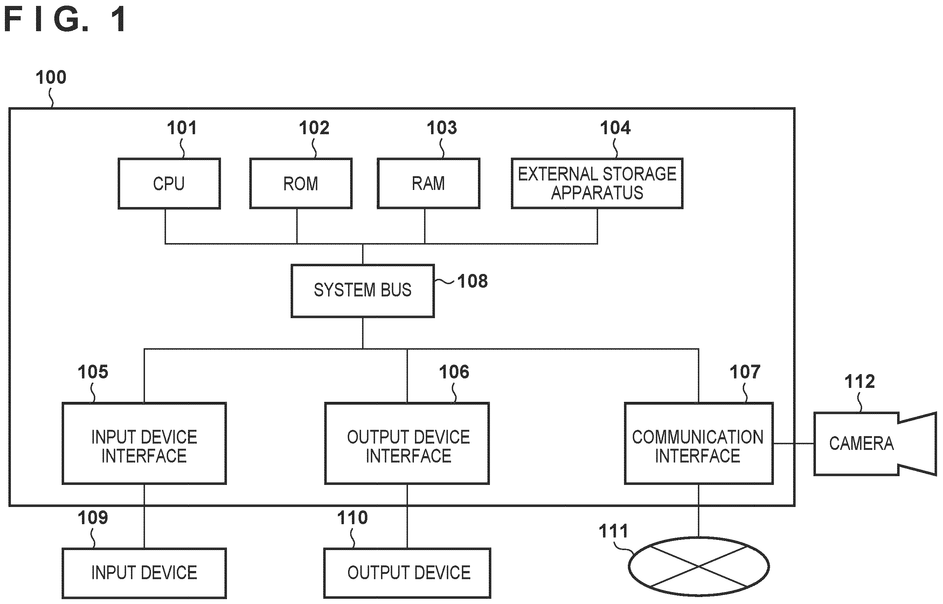

FIG. 1 is a diagram showing a hardware configuration of an information processing apparatus 100. The information processing apparatus 100 executes image processing, which includes a later-described tracking task. Note that although it is illustrated as a single information processing apparatus in FIG. 1, it may be realized by dispersing discrete functions to a plurality of information processing apparatuses. In a case where it is composed of a plurality of information processing apparatuses, they are connected via, for example, a local area network (LAN) so that they can communicate with one another.

An input device 109, an output device 110, a network 111 like the Internet, and a camera 112 are connected to the information processing apparatus 100. Note that the way in which they are connected is not limited to FIG. 1. For example, they may be connected by wire, or may be connected via wireless communication, on an individual basis. Furthermore, the information processing apparatus 100 and the input device 109 or the output device 110 may be independent devices, or may be devices that have been integrated (e.g., a touch panel display).

The input device 109 is a device for making a user input to the information processing apparatus 100. The input device may be, for example, a pointing device or a keyboard. The output device 110 is a device, such as a monitor, capable of displaying images and characters in order to display data held in the information processing apparatus 100, data supplied via a user input, and a result of execution of a program. The camera 112 is an image capturing apparatus capable of obtaining captured images. The camera 112 may, for example, obtain continuous captured images which are at a predetermined interval $\Delta t$, and which are to be input to a later-described image obtainment unit 201. Also, the camera 112 is not limited to a monocular camera, and may be a compound-lens camera.

A CPU 101 is a central processing unit that controls the entirety of the information processing apparatus 100. The CPU 101 causes the information processing apparatus 100 to realize various types of functions and operations, which will be described later, by executing various types of software (computer programs) stored in an external storage apparatus 104, for example. A ROM 102 is a read-only memory that stores programs and parameters that need not be changed. A RAM 103 is a random-access memory that temporarily stores programs and data supplied from an external apparatus or the like.

An external storage apparatus 104 is an external storage apparatus that can be read by the information processing apparatus 100, and stores programs, data, and the like on a long-term basis. The external storage apparatus 104 may be, for example, a hard disk and a memory card that are fixed in place in the information processing apparatus 100. Furthermore, for example, the external storage apparatus 104 may be an optical disc attachable to and removable from the information processing apparatus 100, such as a flexible disk (FD) and a compact disc (CD), a magnetic or optical card, an IC card, a memory card, or the like.

An input device interface 105 is an interface with the input device 109. An output device interface 106 is an interface with the output device 110. A communication interface 107 is an interface for connecting to, for example, the network 111 like the Internet, and the camera 112. A system bus 108 is a bus via which discrete units inside the information processing apparatus 100 are connected in a communication-enabled manner.

Note that although FIG. 1 shows an embodiment in which the camera 112 is connected directly to the information processing apparatus 100 via the communication interface 107, an embodiment is possible in which it is connected to the information processing apparatus 100 via the network 111 or the like. Furthermore, the number of cameras 112 need not be one, and a plurality of cameras may be connected.

As described above, the programs that realize various types of functions and operations are stored in the external storage apparatus 104. When executing a program, the CPU 101 reads this program into the RAM 103. The CPU 101 then executes this program, thereby realizing various types of functions and operations. Note, although it is assumed that various types of programs and sets of setting data are stored in the external storage apparatus 104, it is permissible to adopt a configuration in which they are stored in an external server (not shown). In this case, the information processing apparatus 100 obtains the programs and sets of setting data from this external server via the network 111, for example.

<Functional Configuration of Information Processing Apparatus>

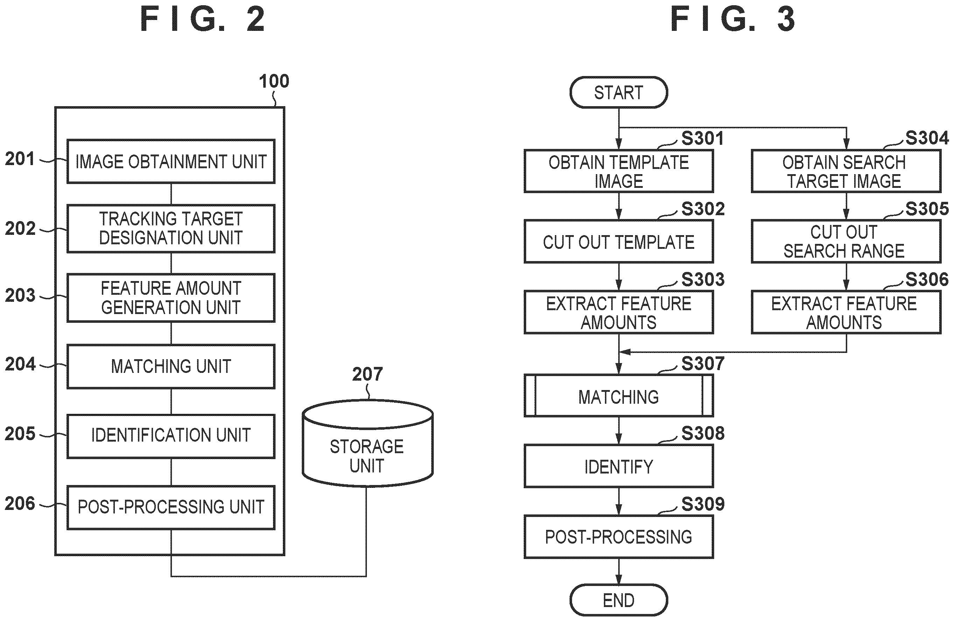

FIG. 2 is a diagram showing a functional configuration of the information processing apparatus 100. As stated earlier, in the present embodiment, the information processing apparatus 100 executes a tracking task for detecting a specific tracking target from an image with use of an NN. In the present embodiment, it is assumed that a tracking task is executed in accordance with the method of the following document 1.

(Document 1) Zhang et al., "Ocean: Object-aware Anchor-free Tracking", ECCV2020, arXiv:2006.10721, 2020 The information processing apparatus 100 includes an image obtainment unit 201, a tracking target designation unit 202, a feature amount generation unit 203, a matching unit 204, an identification unit 205, and a post-processing unit 206. Also, these function units are connected to a storage unit 207 in a communication-enabled manner. Note that although the storage unit 207 is illustrated in such a manner that it exists outside the information processing apparatus 100 in FIG. 2, an embodiment is possible in which the storage unit 207 is included in the information processing apparatus 100.

The image obtainment unit 201 obtains an image of a subject captured by the image capturing apparatus (e.g., a frame image included in moving image data). The subject is, for example, an object like a human and an animal. The following describes an example in which a human is tracked.

The tracking target designation unit 202 determines a tracking target inside an image in accordance with an instruction issued by the user via the input device 109. Examples of a specific method of determining a tracking target include a method of determining a tracking target by touching a subject displayed on the output device 110. Note that other than designation of a tracking target via the input device 109, automatic detection and determination of a main subject or the like inside an image may be performed. For example, a method disclosed in Japanese Patent No. 6556033 can be used as a method of automatically detecting a main subject inside an image. Furthermore, the determination may be made based on both of designation via the input device 109 and the result of detection performed through detection processing (e.g., one of a plurality of detection results is selected and designated). Examples of a technique to detect an object from inside an image include the method disclosed in the following document 2.

(Document 2) Liu et al., "SSD: Single Shot Multibox Detector", ECCV2016, arXiv:1512.02325, 2015 The feature amount generation unit 203 generates feature amounts from the image obtained from the image obtainment unit 201. The feature amounts are generated using the CNN or the like. Although the details will be described later, template feature amounts and search image feature amounts are generated.

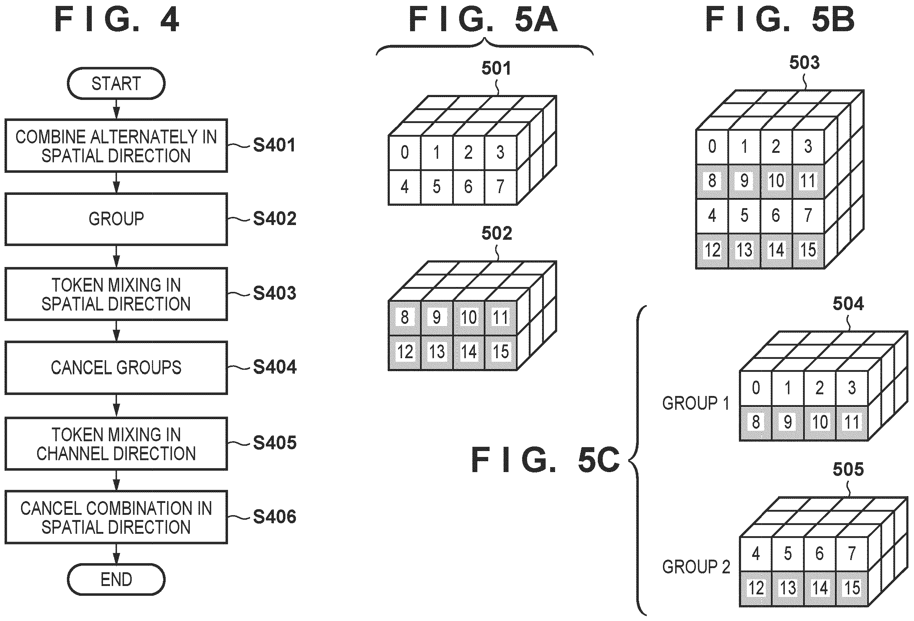

The matching unit 204 executes matching processing with respect to the feature amounts generated by the feature amount generation unit 203. The matching processing is processing for mixing feature amounts on a token level, and is also referred to as token mixing. Here, token mixing is applied to the template feature amounts and the search image feature amounts. The details will be described later with reference to FIG. 4.

Based on the result of token mixing performed by the matching unit 204, the identification unit 205 infers feature amounts (a feature amount map) necessary for specifying the position and size of a subject inside the image.

Based on the feature amount map inferred by the identification unit 205, the post-processing unit 206 forms and outputs a bounding box (BB) indicating the position and size of a person representing the subject. The execution of such tasks as the tracking task is carried out by the identification unit 205, the post-processing unit 206, and the like.

<Operations of Information Processing Apparatus>

FIG. 3 is a flowchart showing a flow of processing executed by the information processing apparatus 100 (the tracking task). Note that the information processing apparatus 100 need not necessarily execute every process described in this flowchart.

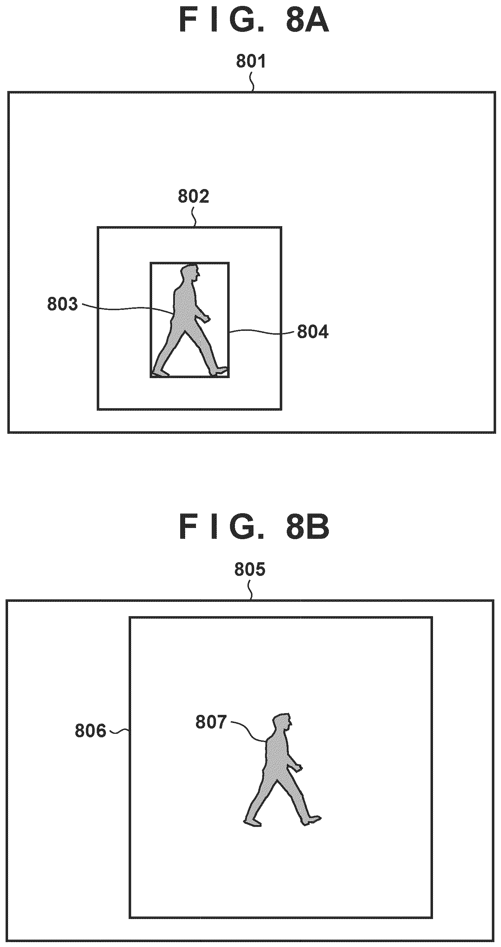

In step S301, the image obtainment unit 201 obtains an image in which a tracking target exists. FIG. 8A is a diagram illustrating a template image. An image 801 is an original image obtained by the image obtainment unit 201. The image 801 includes a tracking target 803, and a BB 804 is a BB indicating the position and size of the tracking target 803. The BB of the tracking target is obtained by the tracking target designation unit 202.

In step S302, the image obtainment unit 201 generates a template image by cutting out a tracking target peripheral image 802 inside the image 801 based on the BB 804 of the tracking target 803 obtained by the tracking target designation unit 202, and resizing the same. For example, it is sufficient that the cutout image be centered at the position of the tracking target 803, and be larger than the size of the tracking target by a constant.

In step S303, the feature amount generation unit 203 extracts features from the template image generated in step S302, thereby generating template feature amounts. The feature amounts can be generated using, for example, a CNN.

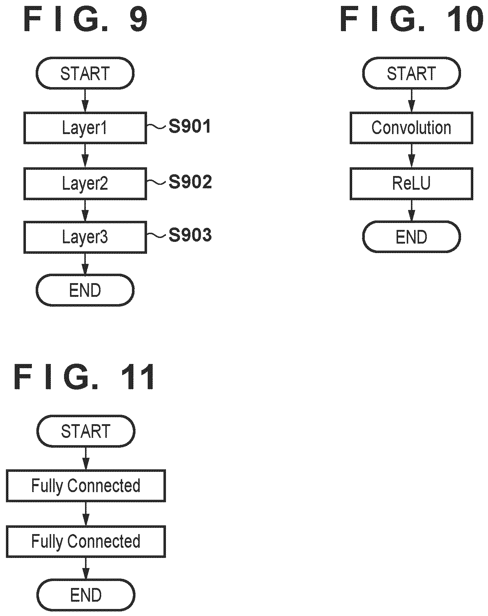

FIG. 9 is a flowchart showing processing executed by the CNN. Also, FIG. 10 is a diagram showing processing in each layer of the CNN. The CNN is composed of one or more layers; here, as an example, a CNN composed of three layers 901 to 903 is illustrated. Each layer is composed of convolutional computation (convolution) and nonlinear computation (e.g., ReLU). A plurality of these elements may be provided, or the nonlinear computation, such as ReLU, may be absent. Furthermore, Average Pooling and Max Pooling may be used in combination. Note that a specific example of generation of feature amounts in the feature amount generation unit 203 is not limited to a specific method.

In step S304, the image obtainment unit 201 obtains a search image that is a target of a search for a tracking target. FIG. 8B is a diagram illustrating the search image. An image 805 is an original image obtained by the image obtainment unit 201. The image 805 includes a tracking target 807.

In step S305, the image obtainment unit 201 obtains the search image by cutting out a tracking target peripheral image 806 inside the image 805 and resizing the same. For example, it is sufficient that the cutout image be centered at the position of the tracking target in an immediately preceding frame, and be larger than the size of the tracking target by a constant.

In step S306, the feature amount generation unit 203 extracts features from the search image generated in step S305, thereby generating search image feature amounts. The search image feature amounts can be generated in a manner similar to the template feature amounts (step S303).

In step S307, the matching unit 204 performs matching with respect to the template feature amounts obtained in step S303 and the search image feature amounts obtained in step S306. As described above, matching refers to token mixing. FIG. 4 is a detailed flowchart of the matching processing (step S307).

In step S401, the matching unit 204 combines the template feature amounts and the search image feature amounts alternately in the spatial direction.

FIGs. 5A to 5C are diagrams illustrating combining of feature amounts and division into groups. In FIGs. 5A to 5C, the vertical direction and the horizontal direction represent the "spatial direction", and the depth direction represents the "channel direction". FIG. 5A shows template feature amounts 501 and search image feature amounts 502. Combining them alternately in the spatial direction (e.g., the vertical direction in FIG. 5A) yields feature amounts (combined alternately in the spatial direction) shown in FIG. 5B. Note that the combining direction is not limited to the vertical direction, and may be the horizontal direction.

In step S402, the matching unit 204 divides the feature amounts that have been combined alternately in the spatial direction into predetermined groups.

FIG. 5C is a diagram showing examples of the feature amounts divided into groups. Here, the feature amounts are divided into two rectangular halves in the vertical direction, and feature amounts 504 representing a group 1 and feature amounts 505 representing a group 2 are generated.

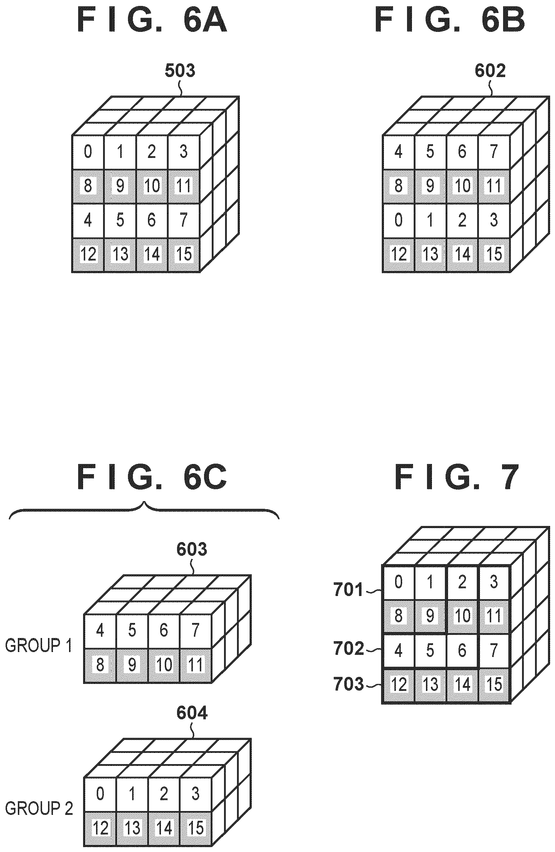

Note that division into groups is not limited to the division shown in FIG. 5C. Division into groups may be performed in any manner as long as one or more groups after the division include both of the template feature amounts and the search image feature amounts. FIG. 7 is a diagram illustrating another example of division of feature amounts into groups. For example, feature amounts may be divided into three groups, like feature amounts 701 to 703.

In step S403, the matching unit 204 performs token mixing with respect to each of the groups after the division. Methods of token mixing include an MLP, which includes a sequence of a plurality of fully-connected (FC) layers as shown in FIG. 11, and MSA.

Note that token mixing based on MSA is represented by the following mathematical formula (1). Q, K, and V are obtained for the features divided into groups via the FC layers.

$$\text{MSA}(Q, K, V) = \text{concat}(\text{head}_1, \text{head}_2, \dots, \text{head}_n) \qquad \dots (1)$$

$$\text{head}_i = Attention\left(QW_i^Q, KW_i^K, VW_i^V\right)$$

$$\text{Attention}(Q, K, V) = \text{softmax}\left(\frac{QK^\cdot}{\sqrt{d_k}}\right)V$$

$$\text{softmax}(x) = \frac{e^x}{\sum_i e^{x_i}}$$

In step S404, the matching unit 204 restores the division into feature groups to which token mixing has been applied on a group-by-group basis in step S403 (restores them to the spatial positions before the division).

In step S405, the matching unit 204 performs token mixing in the channel direction (e.g., the depth direction in FIGs. 5A to 5C). Token mixing in the channel direction can be realized using the CNN shown in FIG. 9.

In step S406, the matching unit 204 cancels the combination of the template feature amounts and the search image feature amounts that have been combined in the spatial direction (restores them to the spatial positions before the combining).

Through the above-described processing of token mixing (steps S401 to S406), the feature amounts are divided into groups, which allows for a reduction in the amount of processing (amount of calculation). Especially, both of the template feature amounts and the search image feature amounts are included in the same group. Note that the processing of token mixing may be repeated multiple times.

In step S308, the identification unit 205 generates feature amounts (a likelihood map and a BB map) necessary for identifying the position and size of a person representing a tracking target from the search image feature amounts output in step S307. Note that the identification unit 205 is composed of a CNN shown in FIG. 9.

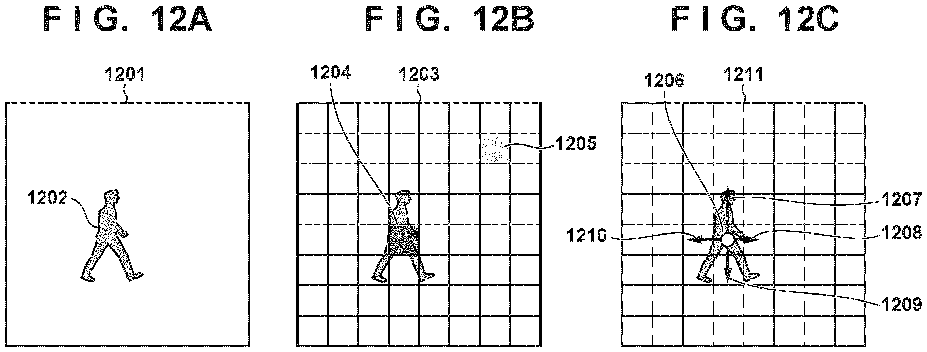

FIGs. 12A to 12C are diagrams illustrating an input image and the output of the CNN (the likelihood map and the BB map). The CNN has been trained to generate feature amounts shown in a likelihood map 1203 and a BB map 1211 with respect to an input image 1201 (FIG. 12A). The likelihood map 1203 is a map indicating an existence likelihood of the tracking target at each position, and the BB map 1211 is a map indicating a BB of the tracking target at each position.

In step S309, the post-processing unit 206 specifies a BB of the person representing the tracking target based on the feature amounts obtained in step S308. For example, the following document 3 provides the details of a method of specifying a BB of an object from the output of a neural network.

(Document 3) Tian et al., "FCOS: Fully Convolutional One-Stage Object Detection", arXiv: 1904.01355, 2019

FIG. 12B shows the likelihood map 1203 that has been inferred by the identification unit 205 with respect to the input image 1201. Regarding each grid region in the likelihood map 1203, a large value is output if the tracking target exists in the region, and a small value is output otherwise. In FIG. 12B, a large value (e.g., compared to a threshold) is output with regard to a grid region 1204, which implies that a person (tracking target) exists at this position. On the other hand, a small value is output with regard to a grid region 1205, which implies that a person does not exist at this position.

FIG. 12C shows the BB map 1211 that has been inferred by the identification unit 205 with respect to the input image 1201. Regarding each grid region in the BB map 1211, values indicating the distances from the center of the grid region to the upper, lower, left, and right edges of a person are output. For example, regarding a grid region 1206 corresponding to the grid region 1204 in the likelihood map 1203, a distance 1207 to the upper edge of the person, a distance 1208 to the right edge thereof, a distance 1209 to the lower edge thereof, and a distance 1210 to the left edge thereof are output. In this way, a BB corresponding to a person 1202 can be formed. The aforementioned document 1 provides the details of a training method for a tracking task.

As described above, according to the first embodiment, prior to token mixing of the template feature amounts and the search image feature amounts, the template feature amounts and the search image feature amounts are combined alternately in the spatial direction, and grouped in the spatial direction. This processing can reduce the size of each group in the spatial direction, thereby allowing for a reduction in the amount of processing of token mixing. Furthermore, token mixing can be performed in a state where each group includes both of the template feature amounts and the search image feature amounts.

(Modification Example 1-1)

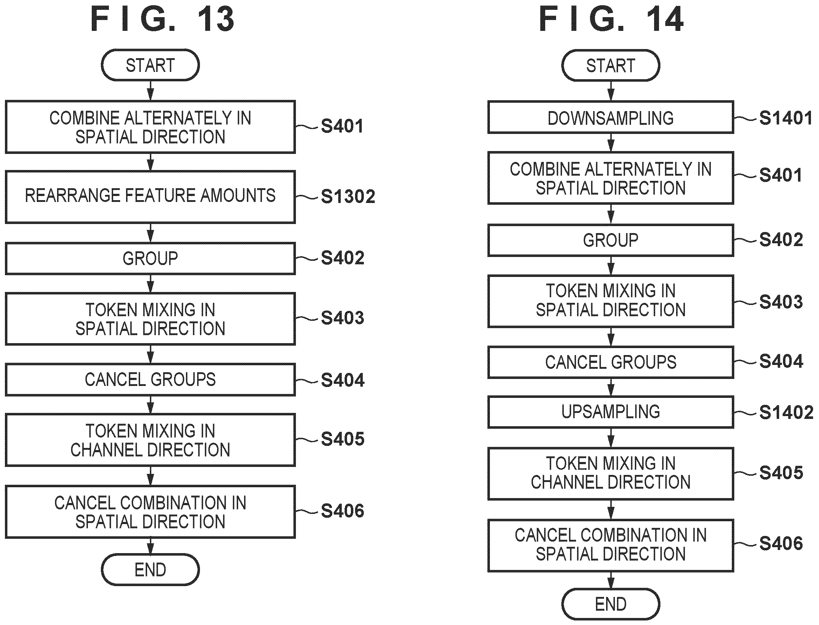

Modification example 1-1 will be described in relation to another example of the matching processing (S307). FIG. 13 is a flowchart showing matching processing according to modification example 1-1. Note that processing of steps S401 to S406 is similar to that of the first embodiment (FIG. 4), but is different therefrom in that step S1302 is executed prior to step S402 (that is to say, after the combining of step S401).

In step S1302, the matching unit 204 rearranges the feature amounts. FIGs. 6A to 6C are diagrams illustrating rearrangement of feature amounts. Similarly to FIG. 5B, feature amounts 503 shown in FIG. 6A are obtained by combining the template feature amounts 501 and the search image feature amounts 502 alternately in the spatial direction in step S401.

Feature amounts 602 shown in FIG. 6B are obtained by cyclically shifting (rearranging) only the template feature amounts (portions shown in white) in the vertical direction among the feature amounts 502. In the subsequent step S402, the feature amounts 602 are divided into groups (FIG. 6C). Note that rearrangement of feature amounts is not limited to cyclic shift in the vertical direction. They may be rearranged in the horizontal direction, or may be rearranged irregularly.

Also, the rearranged feature amounts may be the search image feature amounts, or both of the template feature amounts and the search image feature amounts may be rearranged. That is to say, it is sufficient that the result of division into groups (step S402) be different from the result obtained in a case where the feature amounts are not rearranged.

Furthermore, it is permissible to adopt a configuration in which the rearrangement (S 1302) is performed prior to the combining in the spatial direction (step S401) (i.e., before the combining). It is sufficient that, after the division into groups, at least one or more groups include both of the template feature amounts and the search image feature amounts.

Moreover, in a case where processing of steps S401 to S405 is repeated in a plurality of layers, the method of rearrangement of feature amounts may be changed in each layer. In this way, a variety of combinations of template feature amounts and search image feature amounts can be calculated.

In a case where feature amounts are not rearranged, only feature amounts that are at a short spatial distance from each other contribute to matching. The more efficient the mixing of all feature amounts, the easier the recognition of diverse patterns, and consequently, the more the improvement in the recognition accuracy. That is to say, rearranging feature amounts enables matching to be performed even for positions that are spatially distanced from each other; as a result, the tracking accuracy can be improved.

(Modification Example 1-2)

Modification example 1-2 will be described in relation to still another example of the matching processing (S307). FIG. 14 is a flowchart showing matching processing according to modification example 1-2. Note that processing of steps S401 to S406 is similar to that of the first embodiment (FIG. 4), but is different therefrom in that step S 1401 is executed prior to step S401, and step S 1402 is executed prior to step S405.

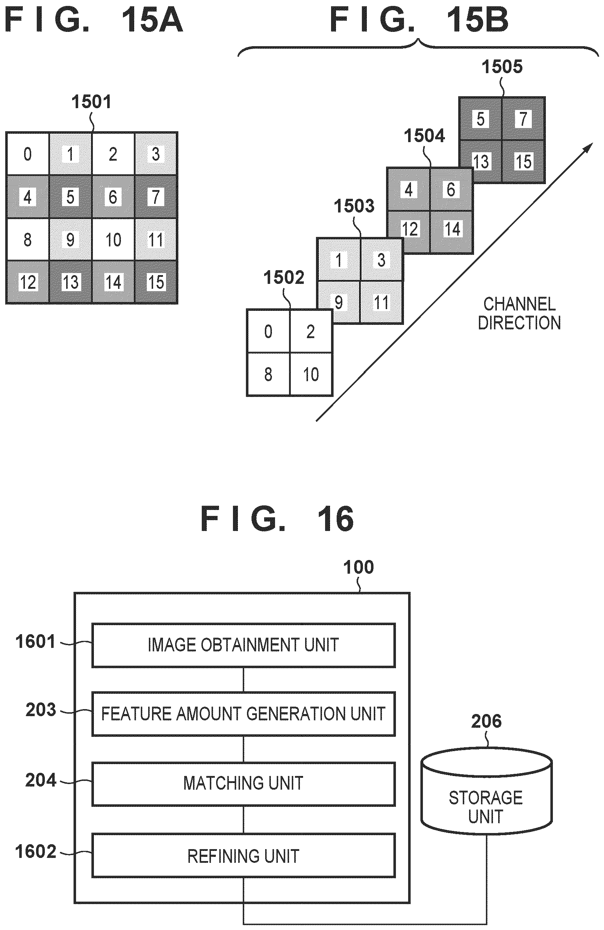

In step S 1401, the matching unit 204 reduces the spatial resolution of the template feature amounts and the search image feature amounts by way of downsampling. FIGs. 15A and 15B are diagrams illustrating downsampling.

Feature amounts 1501 shown in FIG. 15A are feature amounts before downsampling. Here, the feature amounts arranged in the spatial direction are rearranged in the channel direction. In this case, as shown in FIG. 15B, the resolution in the spatial direction is halved both vertically and horizontally, and at the same time, the resolution in the channel direction is quadrupled. The resultant feature amounts obtained by quadrupling the resolution in the channel direction are feature amounts 1502 to 1505. Processing of steps S401 to S404 is executed with respect to the feature amounts that have been downsampled.

In step S1402, the matching unit 204 performs upsampling to restore the original resolution. Note that in upsampling, it is sufficient to perform an operation that is the reverse of downsampling. That is to say, it is sufficient to rearrange the features of the feature amounts 1502 to 1505 back to the form of the feature amounts 1501.

As stated earlier, processing of token mixing in the spatial direction (step S403) is proportional to the square of the spatial resolution. Therefore, the amount of calculation can be reduced by executing processing of steps S402 to S404 after reducing the resolution in the spatial direction by way of downsampling.

(Second Embodiment)

The following describes a second embodiment of an information processing apparatus according to the present invention, using an example of an information processing apparatus that executes a parallax estimation task with use of an NN with respect to images for both eyes obtained by a stereo camera. Note that a hardware configuration of the information processing apparatus is similar to that of the first embodiment (FIG. 1), and thus a description thereof is omitted. functional Configuration of Information Processing Apparatus>

FIG. 16 is a diagram showing a functional configuration of the information processing apparatus 100 according to the second embodiment. In the present embodiment, it is assumed that a parallax estimation task is executed in accordance with the method of the following document 4.

(Document 4) Liang et al., "Learning for Disparity Estimation through Feature Constancy", arXiv: 1712.01039, 2017

The information processing apparatus 100 includes an image obtainment unit 1601, a feature amount generation unit 203, a matching unit 204, and a refining unit 1602. Also, these function units are connected to a storage unit 207 in a communication-enabled manner. The image obtainment unit 1601 obtains both of an image for the right eye and an image for the left eye of the stereo camera. The refining unit 1602 generates a parallax image by refining the feature amounts obtained from the matching unit 204.

<Operations of Information Processing Apparatus>

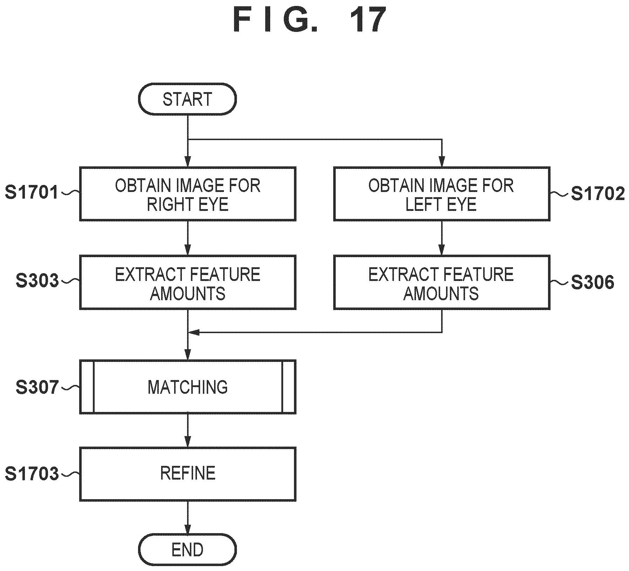

FIG. 17 is a flowchart showing a flow of processing executed by the information processing apparatus 100 (the parallax estimation task). Note that the information processing apparatus 100 need not necessarily execute every process described in this flowchart.

In step S1701, the image obtainment unit 1601 obtains an image for the right eye obtained by the stereo camera.

In step S303, the feature amount generation unit 203 generates feature amounts of the image for the right eye. In step S1702, the image obtainment unit 1601 obtains an image for the left eye obtained by the stereo camera. In step S306, the feature amount generation unit 203 generates feature amounts of the image for the left eye. Note that the method of generating feature amounts is similar to that of the first embodiment.

In step S307, the matching unit 204 performs matching with respect to the feature amounts of the image for the right eye and the feature amounts of the image for the left eye. Similarly to the first embodiment, matching refers to token mixing.

In step S1703, the refining unit 1602 obtains a parallax image by refining the feature amounts obtained in step S307. Refining processing can be executed by using a combination of Convolution shown in FIG. 10 and upsampling. Note that the aforementioned document 4 provides the details of a training method related to parallax estimation involving the stereo camera.

As described above, according to the second embodiment, prior to token mixing of the feature amounts of the image for the right eye and the feature amounts of the image for the left eye, the feature amounts of the image for the right eye and the feature amounts of the image for the left eye are combined alternately in the spatial direction, and grouped in the spatial direction. This processing can reduce the size of each group in the spatial direction, thereby allowing for a reduction in the amount of processing of token mixing. Furthermore, token mixing can be performed in a state where each group includes both of the feature amounts of the image for the right eye and the feature amounts of the image for the left eye.

<Third Embodiment>

As can be understood from the first and second embodiments, the present invention is applicable to any processing that compares two images. For example, the present invention is also applicable to a face authentication task performed by an authentication system. In this case, a first face image obtained at the time of authentication processing and a pre-registered second face image are used as the two images.

The feature amount generation unit 203 generates feature amounts of both of the two face images. Thereafter, the matching unit 204 performs matching with respect to the feature amounts of the first face image and the feature amounts of the second face image.

It is sufficient to execute global average pooling and the MLP shown in FIG. 11 after the matching, and output whether the first face image and the second face image represent the same person.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

**1.** An information processing apparatus (100), comprising:

first generation means (203) configured to generate first feature amounts from a first image;

second generation means (203) configured to generate second feature amounts from a second image that is different from the first image;

combining means (204) configured to combine the first feature amounts and the second feature amounts;

division means (204) configured to divide the combined feature amounts into a plurality of groups; and

mixing means (204) configured to mix feature amounts included in each of the plurality of groups on a group-by-group basis,

wherein at least one group included among the plurality of groups includes both of the first feature amounts and the second feature amounts.

2. The information processing apparatus according to claim 1, **characterized in that**
the combining means combines the first feature amounts and the second feature amounts alternately in a spatial direction.

3. The information processing apparatus according to claim 1, **characterized in that**
the combining means combines the first feature amounts and the second feature amounts irregularly in a spatial direction.

4. The information processing apparatus according to any one of claims 1 to 3, **characterized in that**

the mixing means includes

first means configured to mix the feature amounts included in each of the plurality of groups in relation to a spatial direction on a group-by-group basis,

second means configured to restore positions of the feature amounts obtained by the first means in the spatial direction to positions in the spatial direction before the division by the division means,

third means configured to mix the feature amounts obtained by the second means in relation to a channel direction, and

fourth means configured to restore positions of the feature amounts obtained by the third means in the spatial direction to positions in the spatial direction before the combining by the combining means.

5. The information processing apparatus according to any one of claims 1 to 4, **characterized by** further comprising shift means (204) configured to cyclically shift, in a spatial direction, at least one of the first feature amounts and the second feature amounts before or after the combining by the combining means.

6. The information processing apparatus according to any one of claims 1 to 5, **characterized in that**
the mixing means includes a fully-connected layer or multi-head self attention (MSA).

7. The information processing apparatus according to any one of claims 1 to 6, **characterized by** further comprising task execution means (205) configured to execute a predetermined task that uses a neural network (NN) based on the feature amounts obtained by the mixing means.

8. The information processing apparatus according to claim 7, **characterized in that**

the first image is a first frame image included in moving image data,

the second image is a second frame image included in the moving image data, and

the predetermined task is a tracking task.

9. The information processing apparatus according to claim 7, **characterized in that**

the first image is an image for a right eye obtained by a stereo camera, the second image is an image for a left eye obtained by the stereo camera, and

the predetermined task is a parallax estimation task.

10. The information processing apparatus according to claim 7, **characterized in that**

the first image is a first face image obtained at a time of authentication processing by an authentication system,

the second image is a second face image that has been pre-registered with the authentication system, and

the predetermined task is a face authentication task.

11. A control method for an information processing apparatus (100), the control method comprising:

generating (S303) first feature amounts from a first image;
generating (S306) second feature amounts from a second image that is different from the first image;
combining (S401) the first feature amounts and the second feature amounts;
dividing (S402) the combined feature amounts into a plurality of groups; and
mixing (S403) feature amounts included in each of the plurality of groups on a group-by-group basis,
wherein at least one group included among the plurality of groups includes both of the first feature amounts and the second feature amounts.

12. A program for causing a computer to execute the control method according to claim 11.

# FIG. 1

EP 4 557 233 A2

# FIG. 2

**100**

- **201** IMAGE OBTAINMENT UNIT
- **202** TRACKING TARGET DESIGNATION UNIT
- **203** FEATURE AMOUNT GENERATION UNIT
- **204** MATCHING UNIT
- **205** IDENTIFICATION UNIT
- **206** POST-PROCESSING UNIT

**207** STORAGE UNIT

# FIG. 3

START

**S301** OBTAIN TEMPLATE IMAGE

**S302** CUT OUT TEMPLATE

**S303** EXTRACT FEATURE AMOUNTS

**S304** OBTAIN SEARCH TARGET IMAGE

**S305** CUT OUT SEARCH RANGE

**S306** EXTRACT FEATURE AMOUNTS

**S307** MATCHING

**S308** IDENTIFY

**S309** POST-PROCESSING

END

EP 4 557 233 A2

12

# FIG. 4

START

COMBINE ALTERNATELY IN SPATIAL DIRECTION — S401

GROUP — S402

TOKEN MIXING IN SPATIAL DIRECTION — S403

CANCEL GROUPS — S404

TOKEN MIXING IN CHANNEL DIRECTION — S405

CANCEL COMBINATION IN SPATIAL DIRECTION — S406

END

# FIG. 5A

501

| 0 | 1 | 2 | 3 |
| 4 | 5 | 6 | 7 |

502

| 8 | 9 | 10 | 11 |
| 12 | 13 | 14 | 15 |

# FIG. 5B

503

| 0 | 1 | 2 | 3 |
| 8 | 9 | 10 | 11 |
| 4 | 5 | 6 | 7 |
| 12 | 13 | 14 | 15 |

# FIG. 5C

504

GROUP 1

| 0 | 1 | 2 | 3 |
| 8 | 9 | 10 | 11 |

505

GROUP 2

| 4 | 5 | 6 | 7 |
| 12 | 13 | 14 | 15 |

EP 4 557 233 A2

# FIG. 6A

503

# FIG. 6B

602

# FIG. 6C

603

GROUP 1

604

GROUP 2

# FIG. 7

701
702
703

# FIG. 8A

801

# FIG. 8B

805

# FIG. 9

```
    START
      ↓
  ┌─────────┐
  │ Layer1  │ ~S901
  └─────────┘
      ↓
  ┌─────────┐
  │ Layer2  │ ~S902
  └─────────┘
      ↓
  ┌─────────┐
  │ Layer3  │ ~S903
  └─────────┘
      ↓
     END
```

# FIG. 10

```
      START
        ↓
  ┌──────────────┐
  │ Convolution  │
  └──────────────┘
        ↓
  ┌──────────────┐
  │     ReLU     │
  └──────────────┘
        ↓
       END
```

# FIG. 11

```
        START
          ↓
  ┌──────────────────┐
  │ Fully Connected  │
  └──────────────────┘
          ↓
  ┌──────────────────┐
  │ Fully Connected  │
  └──────────────────┘
          ↓
         END
```

# FIG. 12A

1201

1202

# FIG. 12B

1204    1203

1205

# FIG. 12C

1206    1211

1207

1210

1208

1209

# FIG. 13

START

COMBINE ALTERNATELY IN SPATIAL DIRECTION — S401

REARRANGE FEATURE AMOUNTS — S1302

GROUP — S402

TOKEN MIXING IN SPATIAL DIRECTION — S403

CANCEL GROUPS — S404

TOKEN MIXING IN CHANNEL DIRECTION — S405

CANCEL COMBINATION IN SPATIAL DIRECTION — S406

END

# FIG. 14

START

DOWNSAMPLING — S1401

COMBINE ALTERNATELY IN SPATIAL DIRECTION — S401

GROUP — S402

TOKEN MIXING IN SPATIAL DIRECTION — S403

CANCEL GROUPS — S404

UPSAMPLING — S1402

TOKEN MIXING IN CHANNEL DIRECTION — S405

CANCEL COMBINATION IN SPATIAL DIRECTION — S406

END

# F I G. 15A

1501

| 0 | 1 | 2 | 3 |
|---|---|---|---|
| 4 | 5 | 6 | 7 |
| 8 | 9 | 10 | 11 |
| 12 | 13 | 14 | 15 |

# F I G. 15B

1505

| 5 | 7 |
|---|---|
| 13 | 15 |

1504

| 4 | 6 |
|---|---|
| 12 | 14 |

1503

| 1 | 3 |
|---|---|
| 9 | 11 |

1502

| 0 | 2 |
|---|---|
| 8 | 10 |

CHANNEL
DIRECTION

# F I G. 16

100

| 1601 | IMAGE OBTAINMENT UNIT |
|------|------------------------|
| 203 | FEATURE AMOUNT GENERATION UNIT |
| 204 | MATCHING UNIT |
| 1602 | REFINING UNIT |

206

STORAGE
UNIT

# F I G. 17

START

S1701 — OBTAIN IMAGE FOR RIGHT EYE

OBTAIN IMAGE FOR LEFT EYE — S1702

S303 — EXTRACT FEATURE AMOUNTS

EXTRACT FEATURE AMOUNTS — S306

S307 — MATCHING

S1703 — REFINE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6556033 B

**Non-patent literature cited in the description**

- **DOSOVITSKIY et al.** An Image is Worth 16x16 Words: Transformers for Image Recognition at Scale. *arXiv:2010.11929*, 2020
- **LIU et al.** Swin Transformer: Hierarchical Vision Transformer using Shifted Windows. *arXiv:2103.14030*, 2021
- **LIN et al.** SwinTrack: A Simple and Strong Baseline for Transformer Tracking. *arXiv:2112.00995*, 2021
- **ZHANG et al.** Ocean: Object-aware Anchor-free Tracking. *ECCV2020, arXiv:2006.10721*, 2020
- **LIU et al.** SSD: Single Shot Multibox Detector. *ECCV2016, arXiv:1512.02325*, 2015
- **LIANG et al.** Learning for Disparity Estimation through Feature Constancy. *arXiv: 1712.01039*, 2017